Europäisches Patentamt

European Patent Office

Office européen des brevets

(19)

(11) **EP 0 528 236 B1**

(12) **EUROPÄISCHE PATENTSCHRIFT**

(45) Veröffentlichungstag und Bekanntmachung des Hinweises auf die Patenterteilung:
**28.08.1996 Patentblatt 1996/35**

(51) Int Cl.⁶: **G03B 27/58**

(21) Anmeldenummer: **92113083.7**

(22) Anmeldetag: **31.07.1992**

(54) **Fotografisches Kopiergerät mit einer Vorratskassette**

Photocopying apparatus with a supply cassette

Appareil photographique à copier avec une cassette d'alimentation

(84) Benannte Vertragsstaaten:
**CH DE FR GB LI**

(30) Priorität: **13.08.1991 DE 4126752**
**03.06.1992 DE 4218295**

(43) Veröffentlichungstag der Anmeldung:
**24.02.1993 Patentblatt 1993/08**

(73) Patentinhaber: **Agfa-Gevaert AG**
**D-51373 Leverkusen (DE)**

(72) Erfinder:
• **Nagel, Erich, Dipl.-Ing.**
**W-8011 Anzing (DE)**
• **Benker, Gerhard, Dipl.-Ing.**
**W-8021 Icking (DE)**

(56) Entgegenhaltungen:
EP-A- 0 362 780          WO-A-89/06826
US-A- 4 541 710          US-A- 4 605 300
US-A- 4 652 117

**Beschreibung**

Die Erfindung geht aus von einem fotografischen Kopiergerät mit einer Vorratskassette für die Versorgung des fotografischen Kopiergerätes mit lichtempfindlichem Papier nach dem Oberbegriff von Anspruch 1 und einem Verfahren zum Steuern der Papierentnahme aus einer Papierkassette nach dem Oberbegriff von Anspruch 17.

Vorratskassetten werden üblicherweise in der Dunkelkammer mit einem Wickel unbelichteten Rollenpapiers bestückt. Aus diesen Kassetten werden beispielsweise in Fotofinishing-Betrieben Kopiergeräte mit Kopierpapier versorgt. Auf der anderen Seite des Kopiergerätes befindet sich eine gleich ausgebildete Kassette, in welcher das belichtete Rollenpapier wieder aufgewickelt wird. Wie es in der US-PS 4,605,300 gezeigt ist, werden Kassetten dieser Art aber auch an sogenannten Minilabors eingesetzt, bei denen das Wiederaufwickeln des belichteten Papiers entfällt, da das Papier im gleichen Gerät sofort entwickelt wird.

Um das Papier in das Kopiergerät zu transportieren, ist hier im Kopiergerät in unmittelbarer Nähe des Ausführschlitzes der Kassette ein Antriebsrollenpaar vorgesehen, welches das Papierband von dem Wickel abzieht. In der EP-OS 362 780 ist dagegen eine Kassette gezeigt, bei der sich dieses Antriebsrollenpaar innerhalb des Kassettengehäuses befindet. Um dem schrittweisen Transport in das Kopiergerät folgen zu können, muß der schwere Papierwickel ständig beschleunigt und abgebremst werden. Dabei kann es zu Schwingungen kommen, die zu einem Schlupf zwischen Papierband und Transportrollen führen. Die Folge kann eine Fehlpositionierung des Papiers in der Kopierbühne sein. Um dieses Problem zu beseitigen, wurde in der Vorrichtung nach der US-PS 4,605,300 zwischen der Kopierbühne und der Papierkassette eine Entkoppelungsvorrichtung vorgesehen. Hier wird das Papierband nach dem Austritt aus der Kassette in eine Schlaufe gefördert und von einer zusätzlichen Transportvorrichtung aus der Schlaufe in die Kopierstation transportiert. Insbesondere für die Anwendung bei den Minilabors benötigt diese Vorrichtung jedoch viel Bauraum.

Es ist daher die Aufgabe der Erfindung, ein Kopiergerät mit einer Vorratskassette so auszubilden, daß das Papier aus der Kassette direkt auf die Kopierbühne transportiert werden kann.

Gelöst wird die Aufgabe durch eine Vorrichtung mit den kennzeichnenden Merkmalen von Anspruch 1 und ein Verfahren mit den kennzeichnenden Merkmalen von Anspruch 17. Die Entkoppelung des Antriebes, der das Papier in die Kopierstation fördert, von dem schweren Papierwickel findet auf diese erfindungsgemäße Weise bereits in der Vorratskassette statt. Es müssen daher am Kopiergerät keine zusätzlichen Maßnahmen getroffen werden, so daß auch kein zusätzlicher Raumbedarf besteht. In einem Ausführungsbeispiel wirkt der Wickelantrieb nicht direkt auf den Wickeldorn, sondern über eine Antriebswalze auf die äußerste Windung des Papierwickels. Dadurch wird verhindert, daß sich lediglich die Windungen lockern, ohne daß tatsächlich Papier gefördert wird. Die Antriebswalze des Antriebs ist so in der Kassette gelagert, daß sie über eine Steckverbindung von außen angetrieben werden kann. Damit der Wickel mit seiner äußeren Windung in jedem Fall - also sowohl bei vollem Wickel als auch bei fast leerem Wickel - auf der Antriebswalze aufliegt, ist die Aufnahme für den Wickeldorn so ausgebildet, daß der Dorn und damit der gesamte Wickel bei abnehmendem Durchmesser durch sein Eigengewicht nach unten sinkt. Hierzu können entweder in den Seitenwänden der Kassette entsprechende Führungen vorgesehen sein oder aber der Dorn wird in einer Schwinge gelagert.

In einer bevorzugten Ausführungsform ist auch der Antrieb, der das Papierband in die Kopierstation befördert, in der Vorratskassette vorgesehen. Er ist direkt am Ausfuhrschlitz angeordnet und besteht aus einer Antriebs- und einer Andruckrolle. Um das Papier in der Dunkelkammer einlegen zu können, kann die Andruckrolle von der Antriebsrolle abgehoben und in dieser Position arretiert werden. Durch die Unterbringung auch dieses Antriebs in der Vorratskassette kann das Papier so eingelegt werden, daß sich der Anfang des Bandes noch innerhalb der Kassette befindet. Dadurch entstehen keine Probleme bei der Abdichtung des Ausfuhrschlitzes. Bei bisher üblichen Kopiergeräten mußte der Papieranfang aus dem Ausfuhrschlitz der Kassette herausgeführt werden, damit er von der Antriebseinheit im Kopiergerät erfaßt werden konnte.

Um zu überwachen, daß sich zwischen dem Papierwickel und dem Antrieb, der das Papierband in die Kopierstation befördert, keine Spannung aufbaut, sind verschiedene Lösungen denkbar. Beispielsweise kann die Größe einer in der Vorratskassette gebildeten Schlaufe über Lichtschranken überwacht und der Wickel-Antrieb entsprechend nachgesteuert werden. Andererseits ist es möglich an dem Wickel-Antrieb einen Sensor anzubringen, der registriert, sobald von dem zweiten Antrieb über das Papier Zug auf den Wickel-Antrieb ausgeübt wird. Eine weitere Lösung besteht darin, die von beiden Antrieben geförderte Papierlänge zu vergleichen. Auch dadurch kann eine Schlaufe in der Kassette in etwa gleich groß gehalten werden. Eine weitere Möglichkeit, die sehr wenig Aufwand erfordert, besteht darin, beide Antriebe so miteinander zu koppeln, daß der Wickel-Antrieb eine um einen sehr geringen Betrag geringere Papierlänge transportiert als der Antrieb, der das Papier in die Kopierstation fördert. Diese Differenz der beiden Antriebe muß so ausgelegt sein, daß eine Schlaufe, die beim Einlegen des Papiers gebildet wurde, langsam verbraucht wird. Dabei muß sichergestellt sein, daß sich die Schlaufe nicht vergrößert, aber erst dann verbraucht ist, wenn alles Papier vom Wickel in das Kopiergerät gefördert wurde.

Um die Kassette für verschiedene Papierbreiten verwenden zu können, sind zumindest an der Gehäusewand, in der sich der Ausfuhrschlitz befindet und an der gegenüberliegenden Wand nutförmige Vertiefungen angeordnet, in die sich Führungsbleche einschieben lassen. Mit diesen Führungsblechen wird die Kassette noch im Hellen auf das nötige Papier eingestellt, bevor der Wickel in der Dunkelkammer eingelegt wird.

Um das Kopiergerät wahlweise aus zwei Kassetten mit unterschiedlichen Papieren versorgen zu können, sind die Kassetten seitensymmetrisch ausgebildet. Auf diese Weise ist für ein solches Kopiergerät nur eine einzige Kassettenart notwendig.

Bei einem weiteren Ausführungsbeispiel der erfindungsgemäßen Vorrichtung wirkt der Antrieb für den Wickel direkt auf den Wickelkern. Der Antrieb wird so gesteuert, daß in den Außenwindungen des Wickels eine Lose entsteht und auf diese Weise - ohne eine zusätzliche Schlaufe - eine Zugspannung vermieden wird. Es muß jeweils soviel Lose erzeugt werden, daß bei dem nächsten Transportschritt, mit dem Papier mit der Länge des jeweils gewählten Formates von der Kassette in das Kopiergerät gefördert wird, die erzeugte Lose nicht vollständig abgebaut werden kann. Der zu der Erzeugung der Lose benötigte Winkel, um den der Wickelkern von dem Antrieb gedreht werden muß, ist abhängig von dem aktuellen Wickeldurchmesser. Um diesen Durchmesser feststellen zu können, wird zumindest nach dem Ankoppeln der Vorratskassette an das Kopiergerät ein Kalibriervorgang eingeleitet. In vorteilhafter Weise werden diese Kalibriervorgänge in regelmäßigen Abständen, z. B. jeweils nach dem Kopieren eines Filmes, wiederholt.

Während des Kalibriervorgangs wird eine bestimmte Papierlänge aus der Kassette heraus oder in die Kassette hinein transportiert und der Winkel bestimmt, um den sich der Wickelkern während des Transports verdreht hat. Aus diesem Winkel und der transportierten Papierlänge läßt sich der Durchmesser des in der Vorratskassette befindlichen Papierwickels errechnen. Zur Bestimmung des Drehwinkels der zur Erzeugung der erforderlichen Lose benötigt wird, werden der errechnete Wickeldurchmesser und die gewünschte Formatlänge herangezogen.

Bei der Papierentnahme muß jedoch berücksichtigt werden, daß der Wickeldurchmesser ständig abnimmt, also der Drehwinkel zur Erzeugung der Lose sich ständig vergrößern muß. Um die Abnahme des Wickeldurchmessers rechnerisch erfassen zu können, wird zuerst von einer mittleren Papierstärke ausgegangen. Da bei jedem folgenden Kalibriervorgang auch der Wickeldurchmesser neu berechnet wird, läßt sich auch die genaue Papierstärke über die Abnahme des Wickeldurchmessers und die aus der Kassette geförderte Papierlänge bestimmen. Die Genauigkeit dieses Ergebnisses erhöht sich mit jedem weiteren Kalibriervorgang. Auf diese Weise wird gewährleistet, daß die notwendige Lose jeweils unabhängig vom aktuellen Wickeldurchmesser erzeugt wird.

Um zu verhindern, daß während des Kalibriervorganges lediglich die Lose in den Außenwindungen des Wickels entfernt wird, ohne daß sich der Wickelkern dabei dreht, wird vor jedem Kalibriervorgang das Papierband durch einen Antrieb des Wickels in Aufrollrichtung gespannt.

Um eine platzsparende Aufstellung des Kopiergerätes zu gewährleisten, ist die Vorratskassette in vorteilhafter Weise so ausgebildet, daß sie quer zur Papiertransportrichtung an die Einzugsöffnung des Kopiergerätes herangebracht werden kann. Dazu darf jedoch das Papierende nicht aus dem Ausfuhrschlitz der Kassette hervorstehen. Um nun die Transportwalzen im Kopiergerät in Eingriff mit dem Papierende bringen zu können, ist an dem Ausfuhrschlitz der Kassette ein Walzenpaar angeordnet, welches von Hand antreibbar ist. Dieses innerhalb der Kassette befindliche Walzenpaar ist immer in Eingriff mit dem Papierende. In bevorzugter Weise ist der Antrieb des Walzenpaares mit einer Einrichtung verbunden, mit der die Kassette am Kopiergerät angekoppelt wird. Auf diese Weise ist von einer Bedienperson nur ein einziger Handgriff zum Verriegeln der Kassette und dem Zuführen des Papierendes in das Kopiergerät durchzuführen. Beim Entriegeln der Kassette findet der gleiche Vorgang in umgekehrter Richtung statt. Das Papierende wird dabei zwischen den Transportwalzen im Kopiergerät heraus- und soweit in die Kassette hineingezogen, daß das Papierende aus dem Ausfuhrschlitz der Kassette nicht mehr hervorsteht.

Der Ausfuhrschlitz der Kassette ist mit einem aus Ober- und Unterteil bestehenden Kassettenmaul versehen. In dem Ober- und Unterteil des Kassettenmauls sind sich deckende Öffnungen angebracht. Diese Öffnungen dienen sowohl der visuellen Kontrolle des Papierstandes als auch der Möglichkeit, die Position des Bandendes durch eine Sensoreinrichtung im Kopiergerät überwachen zu können.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird. Es zeigen:

Fig. 1  eine Vorratskassette in schematisierter Darstellung,

Fig. 2  die Kassette aus Fig. 1 im Querschnitt,

Fig. 3  die Kassettenaufnahme eines Kopiergerätes für eine Kassette nach Fig. 5,

Fig. 4  den kombinierten Verriegelungs- und Papierfördermechanismus in der Kassettenaufnahme

Fig. 5  ein zweites Ausführungsbeispiel einer Vorratskassette und

Fig. 6     die Steuerung der Papierentnahme.

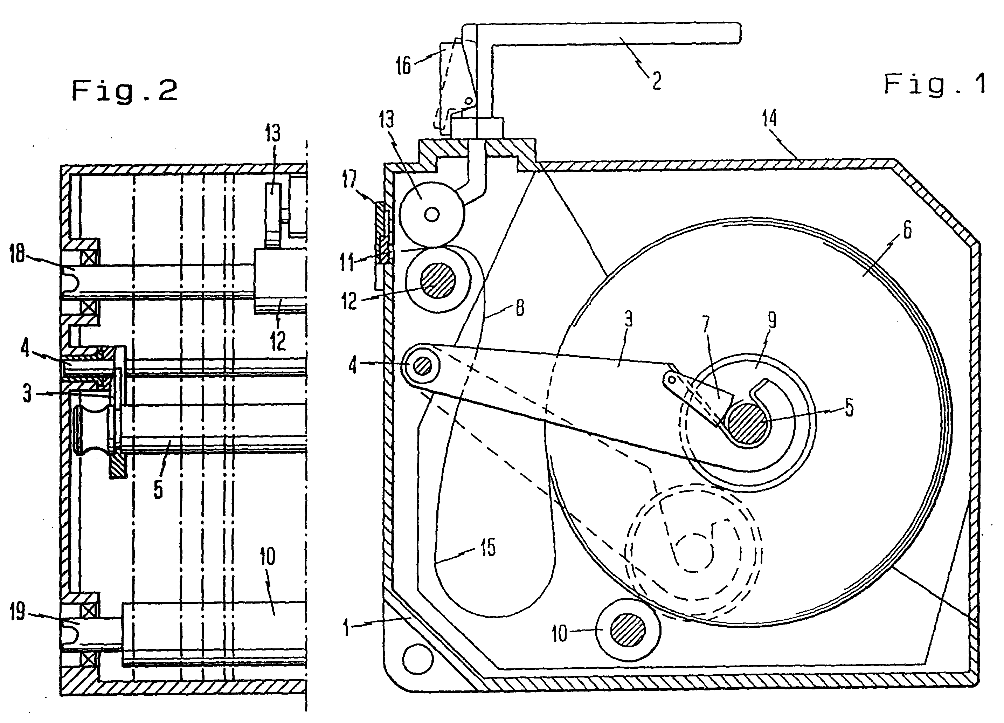

Das gezeigte Ausführungsbeispiel (Fig. 1) weist ein Gehäuse 1 mit einem Tragegriff 2 auf. Die Schwinge 3 ist im Gehäuse über die Achse 4 drehbar gelagert. Um den Dorn 5 des eingelegten Wickels 6 zu sichern, ist die Schwinge mit einem Schwenkzapfen 7 versehen. Das Papierband 8 ist auf dem Kern 9 aufgewickelt. Der Wickel 6 wird durch die Rolle 10 angetrieben. Am Ausfuhrschlitz 11 ist eine weitere Antriebseinrichtung, bestehend aus der Antriebswalze 12 und den Gegendruckrollen 13, vorgesehen.

Um eine Vorratskassette mit Papier zu bestücken, wird der Deckel 14 abgenommen und in entsprechende nutförmige Vertiefungen des Gehäuses beidseitig jeweils ein Führungsblech eingeschoben. Mögliche Positionen für diese Führungsbleche sind in Fig. 2 strichpunktiert dargestellt. Nun kann in der Dunkelkammer der Papierwickel eingesetzt werden. Dazu wird der Schwenkhebel 7 geöffnet und der Dorn 5 des Wickels in die Schwinge 3 eingesetzt. Durch das Schließen des Schwenkhebels 7 ist der Dorn in der Schwinge arretiert. Der Wickel 6 liegt mit seiner äußersten Papierwindung auf der Antriebsrolle 10 auf. Der Papieranfang wird so weit von dem Wickel abgezogen, daß sich die Schlaufe 15 bilden läßt. Am Handgriff 2 wird der Sperrhebel 16 gedrückt, so daß er sich in seiner gestrichelt gezeichneten Position befindet. Der Handgriff wird daraufhin um ca. 45° aus seiner Ruhelage gedreht und kann daraufhin angehoben werden. Mit ihm bewegen sich die über eine nicht näher beschriebene Mimik gekoppelten Gegendruckrollen 13 nach oben. Durch eine weitere Drehung von ca. 45° werden Handgriff 2 und Gegendruckrollen 13 in ihrer abgehobenen Lage fixiert. Der Papieranfang kann nun zwischen die Antriebswalze 12 und die Gegendruckrollen 13 eingelegt werden und ist nach dem Zurückdrehen des Handgriffes 2 und dem damit verbundenen Absenken der Rollen 13 fixiert. Der Bandanfang muß nicht aus dem Gehäuse hervorstehen, so daß die Abdichtung des Ausfuhrschlitzes 11 keinerlei Schwierigkeiten bereitet. Hierzu kann der Schieber 17 vorgesehen sein, der beim Ankoppeln der Vorratskassette an das Kopiergerät automatisch so verschoben wird, daß der Ausfuhrschlitz 11 freiliegt. Weiterhin greifen beim Ankuppeln der Vorratskassette an das Kopiergerät kopiergerätseitige Kupplungen in die Kupplungszapfen 18, 19 der Antriebswalzen 10 und 12.

Selbstverständlich muß die Entkoppelungsschlaufe 15 nicht als freie Schlaufe ausgebildet sein, sondern kann auch durch einen Tänzerarm gestützt werden, der beispielsweise am Deckel 14 der Kassette gelagert ist.

Da die Vorratskassette seitensymmetrisch ausgebildet ist, um sie beidseitig der Kopierstation eines Kopiergerätes ankoppeln zu können, ist in Fig. 2 nur die halbe Kassette dargestellt.

Die im Kopiergerät untergebrachten Motoren für die Antriebswalzen 10 und 12 werden so gesteuert, daß die Antriebswalze 10 pro Arbeitszyklus ca. 1 mm Papierlänge weniger transportiert als die Antriebswalze 12. Die Antriebswalze 12 muß das Papierband 8 sehr schnell - nämlich im Arbeitstakt der Kopierstation - beschleunigen und wieder abbremsen. Dies ist jedoch ohne Schwierigkeiten möglich, da dieser Antrieb nur jeweils die Masse des in der Schlaufe 15 befindlichen Papieres zu fördern hat. Durch die Zwischenschaltung dieser Entkoppelungsschlaufe kann die Antriebswalze 10 die große Masse des Wickels 6 wesentlich langsamer beschleunigen und verzögern. Hat sich die Schlaufe 15 auf ein vorbestimmtes Maß verringert, was beispielsweise durch eine hier nicht dargestellte Infrarotlichtschranke detektiert werden kann, so wird die Schlaufe über die Antriebswalze 10 wieder aufgefüllt. Dies kann z. B. dadurch erfolgen, daß die Walze 10 anstatt der Papierlänge für einen Arbeitstakt die Papierlänge für zwei Arbeitstakte fördert. Auf diese Weise ist gewährleistet, daß sich die Schlaufe nie ganz verbraucht und die Antriebswalze 12 daher auch nie die Masse des gesamten Wickels 6 zu beschleunigen und abzubremsen hat.

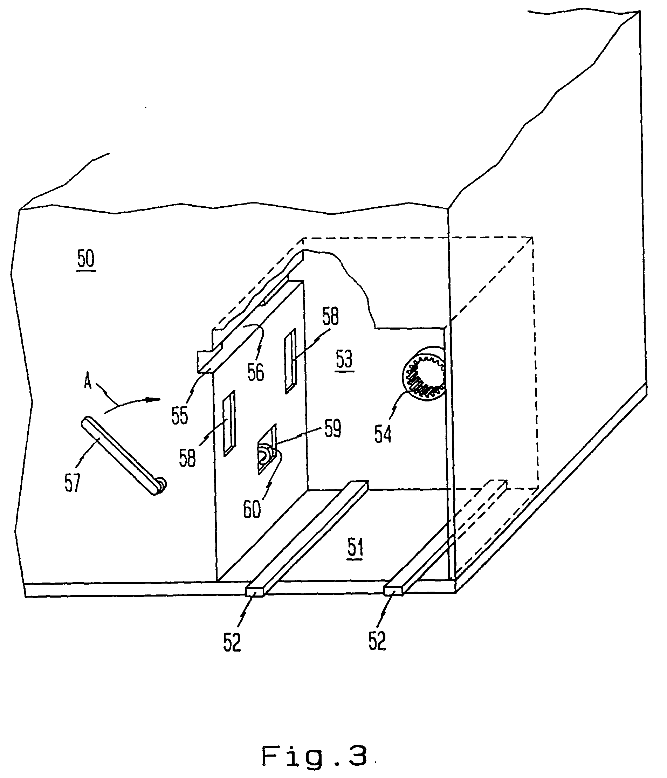

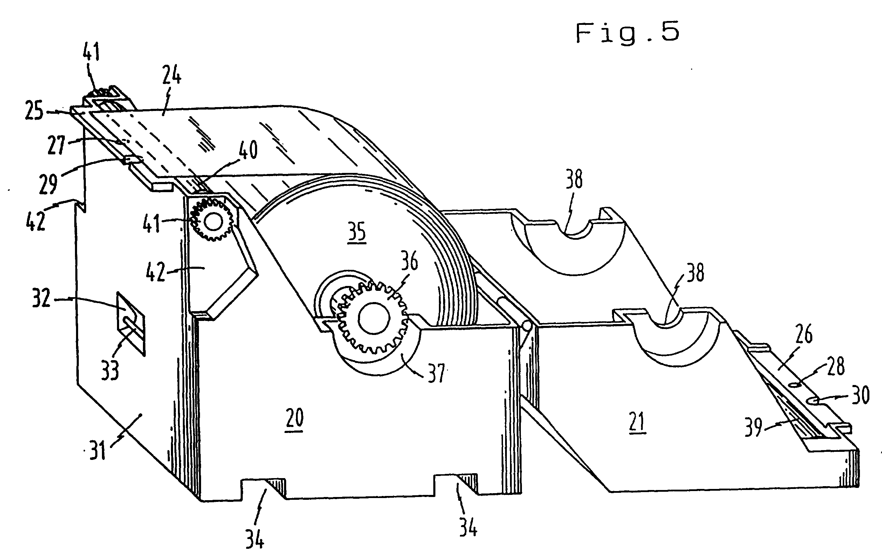

In den Fig. 3 bis 6 wird nun ein zweites Ausführungsbeispiel der Vorratskassette und der Betrieb eines Kopiergerätes mit dieser Kassette beschrieben. Das Ausführungsbeispiel nach der Fig. 5 weist ein Gehäuseunterteil 20 mit einem gelenkig damit verbundenen Deckel 21 auf. In geschlossenem Zustand ergibt sich ein lichtdicht abgeschlossener Innenraum 22. Der Austrittsschlitz 23 für das Papier 24 wird durch ein Unterteil 25 eines Kassettenmaules, welches mit dem Gehäuseunterteil 20 verbunden ist und ein Oberteil 26 des Kassettenmaules, das mit dem Deckel 21 verbunden ist, gebildet. Sowohl im Unterteil 25 als auch im Oberteil 26 des Kassettenmaules ist mittig eine Öffnung 27, 28 vorgesehen, um den Papierstand mit Hilfe einer Lichtschranke kontrollieren zu können. Daneben befinden sich ebenfalls in beiden Teilen des Kassettenmaules die Einkerbungen 29, 30 zur visuellen Kontrolle des Papierstandes. An der Frontseite 31 der Kassette ist eine Vertiefung 32 mit einem Riegelstift 33 vorgesehen. Die nutförmigen Führungen 34 im Kassettenboden dienen der einfacheren Handhabung der Kassette beim Einschub in das Kopiergerät. Der Papierwickel 35 befindet sich auf einem hier nicht sichtbaren Wickelkern, an dem beidseitig die Zahnräder 36 befestigt sind. Das Lager für den Wickelkern wird durch die Lagerschalen 37 im Gehäuseunterteil 20 und die Lagerschalen 38 im Deckel 21 gebildet. Nahe dem Austrittsschlitz 23 im Kassettenmaul 25, 26 ist das Austrittswalzenpaar 39, 40 angebracht, wobei die untere Austrittswalze 40 im Gehäuseunterteil 20 und die obere Austrittswalze 39 im Deckel 21 gelagert ist. Die untere Austrittswalze 40 ist beidseitig mit gezahnten Rädern 41 versehen, für die an der Außenseite des Gehäuseunterteils 20 Aussparungen 42 vorgesehen sind. Die gezahnten Räder 41 sind vorteilhaft aus einem elastischen Werkstoff gefertigt, so daß sie sowohl in noch zu beschreibender Weise maschinell als auch von Hand gedreht werden können.

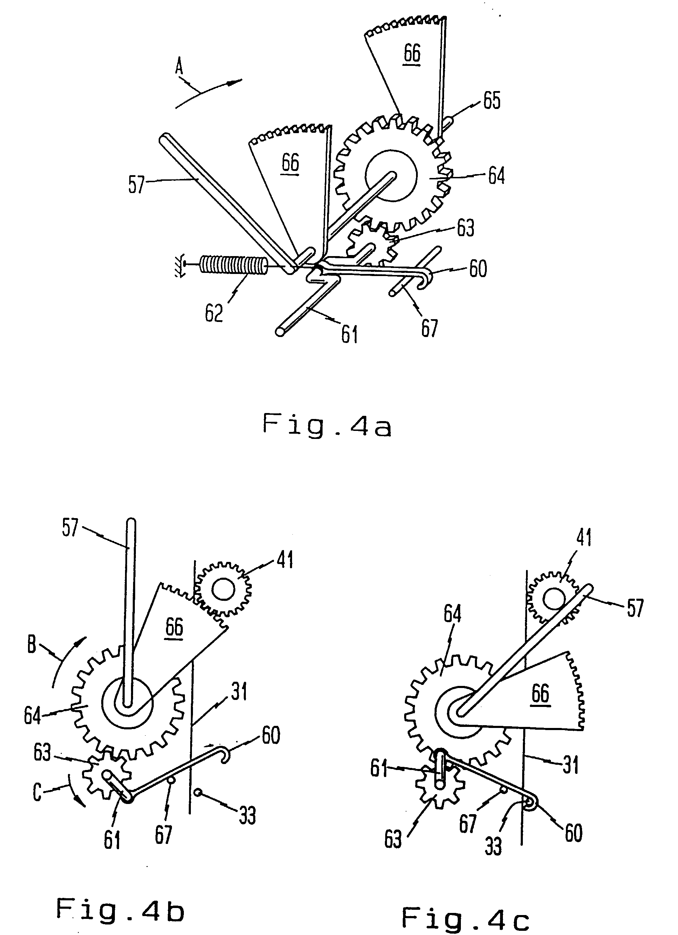

Fig. 3 zeigt ein Kopiergerät 50 zur Verwendung der Kassette nach Fig. 5. Auf dem Boden der Aufnahmeöffnung 51 sind zwei Leisten 52 vorgesehen, auf denen die Kassette mit ihren nutförmigen Vertiefungen 34 eingeschoben werden kann. Durch die Rückwand 53 ragt die innenverzahnte Hülse 54, die eines der Zahnräder 36 des Wickelkernes aufnimmt. Die Aufnahmenut 55 für das Kassettenmaul 25, 26 weist den Einzugsschlitz 56 für das Papier 24 in das Kopiergerät 50 auf. Weiterhin ist in Fig. 3 mit dem verriegelungshebel 57, den Öffnungen 58 und 59 sowie mit dem Riegelhaken 60 der in der Fig. 4 detailliert dargestellte Mechanismus zum Verriegeln der Kassette und zum Transport des Papieranfangs in das Kopiergerät angedeutet.

Dieser Mechanismus besteht aus einer gehäusefest gelagerten Kurbelwelle 61, an der der Riegelhaken 60 gelenkig befestigt ist. Durch die Feder 62 wird der Mechanismus bei nicht eingeschobener Kassette in die in Fig. 4a gezeigte Stellung vorgespannt. Auf der Kurbelwelle 61 ist das Zahnrad 63 fixiert, welches mit dem größeren Zahnrad 64 in Eingriff steht. Dieses ist auf einer zweiten Welle 65 fixiert, die weiterhin die Zahnsegmente 66 und den Verriegelungshebel 57 trägt. Der Riegelhaken 60 liegt auf der Gleitstange 67 auf.

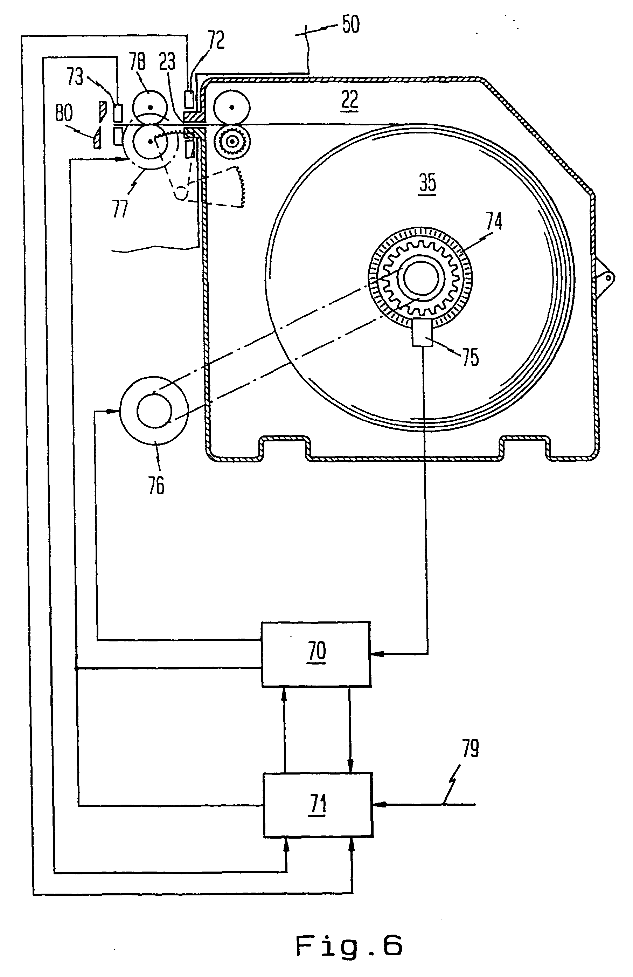

Zur Steuerung der Papierentnahme aus der Kassette weist das Kopiergerät 50 (s. Fig. 6) eine Zähleinrichtung 70, einen Rechner 71, eine erste Lichtschranke 72 und eine zweite Lichtschranke 73 auf. Weiterhin sind eine codierte Scheibe 74, die mit der innenverzahnten Hülse 54 (Fig. 3) in Wirkverbindung steht und ein die Codescheibe 74 abtastender Sensor 75 vorgesehen. Der Papiertransport erfolgt über einen ersten Schrittmotor 76, der beispielsweise über einen Riemenantrieb mit der innenverzahnten Hülse 54 in Verbindung steht, und einen zweiten Schrittmotor 77, der das Einzugswalzenpaar 78 antreibt.

Beim Befüllen einer Kassette geht eine Bedienperson in folgender Weise vor: Der Papierwickel 35 wird mit dem Wickelkern in die Lagerschalen 37 des Gehäuseunterteils 20 eingelegt. Der Anfang des Papiers 24 wird über die Austrittswalze 40 so weit aus der Kassette herausgezogen, daß er über das Unterteil 25 des Kassettenmauls hinausragt. Nun kann der Deckel 21 geschlossen werden. Über die mit der Austrittswalze 40 verbundenen, gezahnten Räder 41 kann nun das Papier manuell so weit zurückbewegt werden, daß es aus dem geschlossenen Kassettenmaul 25, 26 nicht mehr herausragt, aber durch die Einkerbung 29, 30 noch sichtbar bleibt.

Die so vorbereitete Vorratskassette kann nun in das Kopiergerät 50 eingeschoben werden. Hierzu wird sie auf die leicht aus dem Kopiergerät herausragenden Enden der Leisten 52 aufgesetzt, angehoben und in horizontaler Richtung nach hinten eingeschoben. Die Kassette kann nun mit dem Kopiergerät verriegelt werden. Hierzu wird der Verriegelungshebel 57 in Richtung des Pfeiles A umgelegt, bis er in die Einschuböffnung des Kopiergerätes hineinragt und somit auch optisch den Verriegelungszustand kennzeichnet. Beim Umlegen des Verriegelungshebels 57 dreht sich die Welle 65 mit dem Zahnrad 64 in Richtung des Pfeiles B, während die Kurbelwelle 61 und das kleine Zahnrad 63 in Richtung des Pfeiles C gedreht werden. Während dieser Drehung bewegt sich der Riegelhaken 60 über den Riegelstift 33 der Vorratskassette, hakt in diesen ein und zieht die Kassette mit ihrer Frontseite 31 so an das Kopiergerät, daß zwischen dem Kassettenmaul 25, 26 und dem Einzugsschlitz 56 des Kopiergerätes 50 eine lichtdichte Verbindung entsteht. Während am Anfang der Schwenkbewegung die Bedienperson gegen die Kraft der Feder 62 arbeitet, wird die Schwenkarbeit gegen Ende der Bewegung allein von der Feder 62 übernommen. Aus der in Fig. 4c gezeigten Verriegelungsstellung geht hervor, daß bei einer Drehung des kleinen Zahnrads 63 von 270° der Verriegelungshebel 57 in etwa um 100° verschwenkt werden muß. Gleichzeitig zu der Verriegelungsbewegung des Riegelhakens 60, der sich aus der Öffnung 59 des Kopiergerätes herausbewegt, schwenken die Zahnsegmente 66 aus den Öffnungen 58 und greifen in die gezahnten Räder 41 der unteren Austrittswalze 40 ein. Bei der Schwenkbewegung der Zahnsegmente 66 werden folglich die Austrittswalzen 39, 40 angetrieben und das zwischen ihnen liegende Papier 24 in das Kopiergerät 50 gefördert. Im Verriegelungszustand sind die Zahnsegmente 66 wieder außer Eingriff mit den gezahnten Rädern 41. Die Größe der Zahnsegmente 66 ist so gewählt, daß der Anfang des Papieres 24 das Einzugswalzenpaar 78 erreicht. Dieses wird in Betrieb gesetzt, sobald über die erste Lichtschranke 72 der Papieranfang detektiert wird. Das Einzugswalzenpaar 78 stoppt, wenn der Papieranfang durch die zweite Lichtschranke 73 erfaßt wird.

Über ein nicht gezeigtes Terminal wird nun über die Leitung 79 dem Rechner 71 das gewünschte Papierformat mitgeteilt, das in eine den erforderlichen Transportschritten entsprechende Impulszahl zur Steuerung der Schrittmotoren 76 und 77 umgerechnet wird. Der Papieranfang wird über die Einzugswalzen 78 um die bekannte Strecke bis zur Schneideinrichtung 80 vorgeschoben. Nun beginnt ein erster Kalibriervorgang. Hierzu wird über den Motor 76 der Papierwickel 35 in Aufwickelrichtung gedreht, bis das Papier zwischen dem Wickel und dem Einzugswalzenpaar 78 gespannt ist. Danach wird der Motor 77 über den Zähler 70 so angesteuert, daß das Papier um eine Formatlänge langsam in das Kopiergerät gefördert wird. Gleichzeitig tastet der Sensor 75 die Markierungen auf der Codescheibe 74 ab.

Um zu verhindern, daß während des Kalibriervorganges der Wickel 35 und der Antrieb 76 von den Einzugswalzen 78 mitbewegt werden müssen, kann das Kalibrieren auch wie folgt durchgeführt werden: ausgelöst durch das Einfahren der Kassette wird über den Motor 76 eine Lose erzeugt, die auch bei kleinstem Wikkeldurchmesser für den Kalibrier- und den Einfädelvorgang ausreichend ist. Beim Verriegeln wird dann, wie oben beschrieben, das Papier von dem Einzugswalzenpaar 78 erfaßt und weitertransportiert, bis der Papieranfang von der zweiten Lichtschranke 73 erfaßt wird. Der Schrittmotor 77 transportiert das Papier dann noch um eine vorgegebene Schrittzahl, die einer festen Länge entspricht, weiter. Nach dem Stoppen des Motors 77 wird der Wickel 35 in Aufwickelrichtung angetrieben. Sobald die Lose in den äußeren Wickelwindungen entfernt ist, wird das Papier im Kopiergerät wieder in Richtung Kassette gezogen und das Einzugswalzenpaar 78 beginnt sich entgegen der Einzugsrichtung zu drehen. Der mit dem Einzugswalzenpaar 78 in Wirkverbindung stehende Schrittmotor 77 wird in diesem Fall als Impulsgeber verwendet. Hat sich das Papier um die feste Strecke, mit der das Papier zuvor in das Kopiergerät hineingefördert wurde und die der vorgegebenen Impulszahl entspricht, zurückbewegt, schaltet der Motor 76 für den Wickelantrieb ab. In der Zeitspanne, in der von dem Schrittmotor 77 Impulse abgegeben wurden, werden auch die vom Sensor 75 abgegebenen Impulse gezählt.

Die vom Zähler 70 gezählten Impulse werden im Rechner 71 in den entsprechenden Drehwinkel umgewandelt. Aus der Transportstrecke s für das Papier und dem dazugehörigen Abwickelwinkel phi läßt sich nun über die Formel

$$r_2 = s : phi$$

der Außenradius $r_2$ des Wickels 35 ermitteln. Geht man von einer mittleren bekannten Papierdicke d und dem ebenfalls bekannten Radius des Wickelkerns $r_1$ aus, so ergibt sich für die Länge L des auf dem Wickel aufgerollten Papierbandes

$$L = (r_2{}^2 - r_1{}^2) \times \frac{pi}{d} .$$

Die Länge L des Papierbandes auf dem Wickel verringert sich mit jedem Transportschritt um die transportierte Strecke s und man erhält die Länge $L_n$ nach dem n-ten Transportschritt, die sich wie folgt berechnet:

$$L_n = L - n \times s$$

(n = Anzahl der Transportschritte).

Der nach dem n-ten Transportschritt erhaltene Außendurchmesser $r_{2_n}$ ergibt sich aus der Formel

$$r_{2_n} = \sqrt{r_1{}^2 + \frac{L_n \times d}{pi}}$$

Daraus läßt sich nun der Drehwinkel $phi_n$ bestimmen, um den der Papierwickel 35 bewegt werden muß, um in seinen Außenwindungen vor jedem Transportschritt die Lose zu erzeugen, die notwendig ist, um einen Antrieb des Wickels selbst durch die Einzugswalzen 78 zu verhindern und eine schlupffreie und spannungslose Einzugsbewegung des Papiers zu gewährleisten. Es ergibt sich:

$$phi_n = \frac{s}{\sqrt{\left(\frac{s}{phi}\right)^2 - \frac{n \times s \times d}{pi}}}$$

Da bisher von einer mittleren Papierdicke d ausgegangen wurde, wird der tatsächliche Drehwinkel, mit dem der Papierwickel vor jedem Transportschritt bewegt wird, etwas größer als der errechnete Winkel gewählt. Auf diese Weise ist sichergestellt, daß in dem Papierband zwischen den Einzugsrollen 78 und dem Wickel 35 keine Spannung auftritt.

In vorteilhafter Weise wird der Kalibriervorgang in bestimmten Abständen - beispielsweise nach jedem kopierten Film - wiederholt. Auf diese Weise läßt sich auch die tatsächliche Papierdicke mit jedem Kalbriervorgang genauer bestimmen und bei der Berechnung des Drehwinkels verwenden. Bezeichnet man den bei dem zweiten Kalibriervorgang gemessenen Drehwinkel mit $phi_2$, so gilt:

$$d = \left(\left(\frac{s}{phi}\right)^2 - \left(\frac{s}{phi_2}\right)^2\right) \times \frac{pi}{s \times n} .$$

wobei mit n die Zahl der Transportschritte zwischen dem ersten und dem zweiten Kalibriervorgang bezeichnet ist.

Ein weiterer Vorteil dieser Berechnungsmethode ist, daß der Bedienperson zu jedem Zeitpunkt die noch auf dem Wickel vorhandene Menge Papier bekannt ist.

Soll die Vorratskassette ausgetauscht werden, beispielsweise, um mit einem anderen Bildformat weiterzuarbeiten, wird von der Bedienperson über ein Terminal ein entsprechender Befehl an den Rechner 71 gegeben. Der Motor 77 wird nun direkt durch den Rechner so angesteuert, daß das Papier durch das Walzenpaare 78 In die Kassette zurückgefördert wird. Dieser Transport wird gestoppt, sobald durch die zweite Lichtschranke 73 der Papieranfang detektiert wird. Das Papier ist nun in der exakt gleichen Stellung, in der es sich nach dem Ankoppeln der Kassette befunden hat. Der Motor 77 wird nun stromlos geschaltet, so daß das Walzenpaar 78 frei drehbar ist. Verschwenkt die Bedienperson den Verriegelungshebel 57 in seine ursprüngliche, in Fig. 3 und Fig. 4a gezeigte Stellung, so greifen die Zahnsegmente 66 wieder in die gezahnten Räder 41 der unteren Austrittswalze 40 ein und bewegen sich dabei in das Gehäuse des Kopiergerätes 50 zurück. Bei diesem Vorgang transportieren die Austrittswalzen 39, 40 das Papier weiter zurück in die Kassette, genau in die Stellung, in der sich der Papieranfang vor dem Verriegelungsvorgang befunden hat. Gleichzeitig löst sich der Riegelhaken 60 von dem Riegelstift 33, zieht sich ebenfalls in das Gehäuse des Kopiergerätes 50 zurück und gibt dadurch die Kassette frei, die nun von der Bedienperson herausgezogen werden kann.

Wird während eines Kopiervorganges der in der Kassette befindliche Wickel verbraucht, so wird von der ersten Lichtschranke 72 das Papierende detektiert. In diesem Fall stoppt der Motor 77 sofort das Walzenpaar 78 und die Bedienperson wird zum Kassettenwechsel aufgefordert. Bei diesem bereits oben beschriebenen Vorgang fällt der Papierrest in die Vorratskassette und muß beim neuerlichen Beladen von der Bedienperson entfernt werden.

**Patentansprüche**

1. Fotografisches Kopiergerät mit einer Vorratskassette für die Versorgung des fotografischen Kopiergerätes mit lichtempfindlichem Papier, wobei die Kassette mit einer Aufnahmeeinrichtung für einen Papierwickel, einem Gehäuse mit lichtdicht verschließbarem Deckel und einem Schlitz zum Herausführen des Papiers versehen ist, <u>dadurch gekennzeichnet</u>, daß ein am Wickel (6; 35) angreifender, den Wickel in Abwickelrichtung drehender Wickelantrieb (10; 36, 76) vorgesehen ist, der durch geeignete Steuermittel so steuerbar ist, daß das Papierband (8; 24) in der Kassette im Bereich zwischen dem Schlitz (11; 23) und dem Wickel (6; 35) während des Transports des Papierbandes (8; 24) in das Kopiergerät (50) nicht unter Zugspannung steht.

2. Vorrichtung nach Anspruch 1, dadurch gekennzeichnet, daß der Wickel-antrieb (10) direkt an der äußeren Papierwindung des Wickels (6) angreift.

3. Vorrichtung nach Anspruch 2, dadurch gekennzeichnet, daß die Aufnahme für den Wickel (6) so ausgebildet ist, daß der Wickel durch sein Eigengewicht - unabhängig von seinem Durchmesser - auf einer Rolle (10) des Wickelantriebs aufliegt.

4. Vorrichtung nach Anspruch 2, dadurch gekennzeichnet, daß innerhalb des Kassettengehäuses direkt vor dem Schlitz (11) ein zweiter Antrieb (12, 13) zur Förderung des Papierbandes (8) in das Kopiergerät vorgesehen ist.

5. Vorrichtung nach Anspruch 4, dadurch gekennzeichnet, daß der zweite Antrieb eine Antriebswalze (12) und Andruckrollen (13) aufweist und daß die Andruckrollen in einer vom Papierband abgehobenen Stellung arretierbar sind.

6. Vorrichtung nach Anspruch 1, dadurch gekennzeichnet, daß das Papierband (8) zwischen dem Wickel (6) und dem Schlitz (11) eine Schlaufe (15) bildet und die Größe der Papierschlaufe (15) durch wenigstens eine Lichtschranke überwacht wird.

7. Vorrichtung nach Anspruch 4, dadurch gekennzeichnet, daß die Mittel zum Steuern des Antriebs einen Sensor aufweisen, der eine Zug-Kraftübertragung von dem zweiten Antrieb (12, 13) über das Papier (8) auf den Wickelantrieb (10) registriert.

8. Vorrichtung nach Anspruch 4, dadurch gekennzeichnet, daß die Mittel zum Steuern einen Rechner aufweisen, der die vom zweiten (12, 13) und vom Wickelantrieb (10) jeweils geförderte Papierlänge vergleicht.

9. Vorrichtung nach Anspruch 1, dadurch gekennzeichnet, daß das Gehäuse (1) nutförmige Vertiefungen aufweist, in die - entsprechend der verwendeten Papierbreite - Führungsbleche einschiebbar sind.

10. Vorrichtung nach Anspruch 1, dadurch gekennzeichnet, daß die Vorratskassette seitensymmetrisch ausgebildet ist.

11. Vorrichtung nach Anspruch 1, dadurch gekennzeichnet, daß der Wickel-Antrieb (36) den Wickelkern so antreibt, daß in den Außenwindungen des Wickels eine Lose entsteht.

12. Vorrichtung nach Anspruch 11, dadurch gekennzeichnet, daß außerhalb des Kassettengehäuses direkt nach dem Schlitz (23) ein zweiter Antrieb (77, 78) zur Förderung des Papierbandes (24) in das Kopiergerät vorgesehen ist.

13. Vorrichtung nach Anspruch 11, dadurch gekennzeichnet, daß innerhalb des Kassettengehäuses vor dem Schlitz (23) von Hand antreibbare Transportwalzen (39, 40) vorgesehen sind.

14. Vorrichtung nach Anspruch 13, dadurch gekennzeichnet, daß der Antrieb (41) für die Transportwalzen (39, 40) mit einer Einrichtung (60) zum Verriegeln der Kassette an dem Kopiergerät (50) koppelbar ist.

15. Vorrichtung nach Anspruch 14, dadurch gekennzeichnet, daß der Antrieb (41) für die Transportwalzen durch die Verriegelung so gesteuert ist, daß während des Verriegelns eine bestimmte Papierlänge aus der Kassette herausgefördert und während des Entriegelns die gleiche Papierlänge in die Kassette hineingefördert wird.

16. Vorrichtung nach Anspruch 11, dadurch gekennzeichnet, daß an dem Schlitz ein Kassettenmaul (25, 26) vorgesehen ist, das in seinem den Papierlauf bildenden Ober- (26) und Unterteil (25) sich deckende Öffnungen (27, 28, 29, 30) zur Kontrolle des Papierstands aufweist.

17. Verfahren zum Steuern der Papierentnahme aus einer Vorrichtung nach Anspruch 11, dadurch gekennzeichnet, daß der Wickelantrieb so gesteuert wird, daß in der Kassette eine Lose vorbestimmter Länge entsteht und daß zumindest nach dem Verbinden der Kassette mit dem Kopiergerät ein Kalibriervorgang eingeleitet wird, bei dem der zur Erzeugung der Lose notwendige Drehwinkel des Wickels bestimmt wird.

18. Verfahren nach Anspruch 17, dadurch gekennzeichnet, daß bei dem Kalibriervorgang der Drehwinkel des Wickels (35) während des Transports einer bestimmten Papierlänge gemessen und daraus errechnet wird, um welchen vom Durchmesser des Wickels (35) abhängigen Drehwinkel der Wickel (35) bewegt werden muß, um vor jedem Transportschritt die notwendige Lose zu erzeugen.

19. Verfahren nach Anspruch 18, dadurch gekennzeichnet, daß die Lose in den Außenwindungen des Wickels (35) nach dem Kalibriervorgang und noch vor dem ersten Transportschritt des Papiers (24) in das Kopiergerät (50) erzeugt wird und daß der Wickel (35) so angetrieben wird, daß diese Lose während der weiteren Transportschritte ungefähr erhalten bleibt.

20. Verfahren nach Anspruch 19, dadurch gekennzeichnet, daß während der Papierentnahme in regelmäßigen Abständen Kalibriervorgänge gestartet werden und anhand der Abnahme des Wckeldurchmessers und der entnommenen Papierlänge die Dicke des Papiers und die auf dem Wickel noch gespeicherte Papierlänge errechnet wird.

21. Verfahren nach Anspruch 18, dadurch gekennzeichnet, daß vor jedem Kalibriervorgang das Papier zwischen dem Wickelantrieb und der Stelle, an der die entnommene Papierlänge gemessen wird, gespannt wird.

**Claims**

1. Photocopying apparatus having a dispensing cassette for supplying the photocopying apparatus with light-sensitive paper, the cassette being provided with a receiving device for a reel of paper, a housing having a lid closable in a light-proof manner and a slot for bringing out the paper, characterized in that a reel drive (10; 36, 76) is provided which acts upon the reel (6; 35), rotates the reel in take-off direction and is controllable by suitable control means in such a way that the paper strip (8; 24) in the cassette is not under tensile stress in the region between the slot (11; 23) and the reel (6; 35) during feed of the paper strip (8; 24).

2. Device according to claim 1, characterized in that the reel drive (10) acts directly upon the outer paper turn of the reel (6).

3. Device according to claim 2, characterized in that the receiver for the reel (6) is constructed in such a way that the reel rests under its own weight - independently of its diameter - on a roller (10) of the reel drive.

4. Device according to claim 2, characterized in that provided inside the cassette housing directly in front of the slot (11) is a second drive (12, 13) for feeding the paper strip (8) into the copying apparatus.

5. Device according to claim 4, characterized in that the second drive comprises a drive roller (12) and back-pressure rollers (13) and that the back-pressure rollers are arrestable in a position in which they are lifted off the paper strip.

6. Device according to claim 1, characterized in that the paper strip (8) between the reel (6) and the slot (11) forms a loop (15) and the size of the paper loop (15) is monitored by at least one light barrier.

7. Device according to claim 4, characterized in that the means of controlling the drive comprise a sensor which registers a transfer of tensile load from the second drive (12, 13) via the paper (8) to the reel drive (10).

8. Device according to claim 4, characterized in that the means of control comprise a computer which compares the length of paper fed in each case by the second drive (12, 13) and the reel drive (10).

9. Device according to claim 1, characterized in that the housing (1) has groove-like recesses into which - in accordance with the paper width being used - guide plates are insertable.

10. Device according to claim 1, characterized in that the dispensing cassette is of a laterally symmetrical construction.

11. Device according to.claim 1, characterized in that the reel drive (36) drives the reel core in such a way that slack is generated in the outer turns of the reel.

12. Device according to claim 11, characterized in that provided outside of the cassette housing directly after the slot (23) is a second drive (77, 78) for feeding the paper strip (24) into the copying apparatus.

13. Device according to claim 11, characterized in that manually drivable feed rollers (39, 40) are provided inside the cassette housing in front of the slot (23).

14. Device according to claim 13, characterized in that the drive (41) for the feed rollers (39, 40) may be coupled to a device (60) for locking the cassette on the copying apparatus (50).

15. Device according to claim 14, characterized in that the drive (41) for the feed rollers is controlled by the locking process in such a way that, during locking, a specific length of paper is fed out of the cassette and, during unlocking, the same length of paper is fed into the cassette.

16. Device according to claim 11, characterized in that provided at the slot is a cassette mouth (25, 26) which, in its top part (26) and bottom part (25) forming the paper run, has aligned apertures (27, 28, 29, 30) for inspecting the paper level.

17. Method of controlling the removal of paper from a device according to claim 11, characterized in that the reel drive is controlled in such a way as to generate slack of a predetermined length in the cassette and that at least after connection of the cassette to the copying apparatus a calibration process is initiated, in which the angle of rotation of the reel required to generate the slack is determined.

18. Method according to claim 17, characterized in that during the calibration process the angle of rotation of the reel (35) during feed of a predetermined length of paper is measured and used to calculate the angle of rotation dependent on the diameter of the reel (35) through which the reel (35) has to be moved in order to generate the necessary slack before each feed step.

19. Method according to claim 18, characterized in that the slack is generated in the outer turns of the reel (35) after the calibration process and prior to the first feed step of the paper (24) into the copying apparatus (50) and that the reel (35) is driven in such a way that said slack is approximately maintained during the subsequent feed steps.

20. Method according to claim 19, characterized in that, during the removal of paper, calibration processes are initiated at regular intervals and the decrease in the reel diameter and the length of paper removed are used to calculate the thickness of the paper and the length of paper still stored on the reel.

21. Method according to claim 18, characterized in that, prior to each calibration process, the paper is tightened between the reel drive and the point at which the length of paper removed is measured.

**Revendications**

1. Appareil photographique à copier avec une cassette d'alimentation pour l'approvisionnement de l'appareil photographique à copier en papier photosensible, la cassette étant munie d'un dispositif récepteur pour une bobine de papier, d'un boîtier avec un couvercle pouvant être fermé de manière étanche à la lumière et d'une fente pour faire sortir le papier, caractérisé en ce qu'il est prévu un dispositif d'entraînement de bobine (10 ; 36, 76) qui agit sur la bobine (6 ; 35) en la faisant tourner dans le sens de déroulement et qui peut être commandé par des moyens de commande appropriés, de façon que, dans la cassette, la bande de papier (8 ; 24) ne soit pas soumise à un effort de traction dans la zone située entre la fente (11 ; 23) et la bobine (6 ; 35) lors du transport de la bande de papier (8 ; 24) vers l'appareil à copier (50).

2. Dispositif selon la revendication 1, caractérisé en ce que le dispositif d'entraînement de bobine (10) agit directement sur la spire extérieure du papier de la bobine (6).

3. Dispositif selon la revendication 2, caractérisé en ce que le moyen récepteur de la bobine (6) est conçu de façon que la bobine prenne appui par son propre poids - indépendamment de son diamètre - sur un rouleau (10) du dispositif d'entraînement de bobine.

4. Dispositif selon la revendication 2, caractérisé en ce qu'à l'intérieur du boîtier de la cassette, juste avant la fente (11), est prévu un second dispositif d'entraînement (12, 13) pour amener la bande de papier (8) dans l'appareil à copier.

5. Dispositif selon la revendication 4, caractérisé en ce que le second dispositif d'entraînement comporte un cylindre d'entraînement (12) et des galets de pression (13), et en ce que les galets de pression peuvent être immobilisés dans une position éloignée de la bande de papier.

6. Dispositif selon la revendication 1, caractérisé en ce que la bande de papier (8) forme une boucle (15) entre la bobine (6) et la fente (11), et la dimension de la boucle de papier (15) est contrôlée par au moins un barrage photo-électrique.

7. Dispositif selon la revendication 4, caractérisé en ce que les moyens pour commander le dispositif d'entraînement comportent un capteur qui enregistre la transmission d'un effort de traction du second dispositif d'entraînement (12, 13) au dispositif d'entraînement de bobine (10) par l'intermédiaire du papier (8).

8. Dispositif selon la revendication 4, caractérisé en ce que les moyens pour commander comportent un calculateur qui compare les longueurs de papier fournies respectivement par le second dispositif d'entraînement (12, 13) et par le dispositif d'entraînement de bobine (10).

9. Dispositif selon la revendication 1, caractérisé en ce que le boîtier (1) comporte des renfoncements en forme de rainures, dans lesquels - en fonction de la largeur de papier utilisée - des tôles de guidage peuvent être engagées.

10. Dispositif selon la revendication 1, caractérisé en ce que la cassette d'alimentation possède des côtés symétriques.

11. Dispositif selon la revendication 1, caractérisé en ce que le dispositif d'entraînement de bobine (36) entraîne l'axe d'enroulement de façon à créer un mou dans les spires extérieures de la bobine.

12. Dispositif selon la revendication 11, caractérisé en ce qu'à l'extérieur du boîtier de la cassette, juste après la fente (23), est prévu un second dispositif d'entraînement (77, 78) pour amener la bande de papier (24) dans l'appareil à copier.

13. Dispositif selon la revendication 11, caractérisé en ce qu'à l'intérieur du boîtier de la cassette, avant la fente (23), sont prévus des cylindres de transport (39, 40) à entraînement manuel.

14. Dispositif selon la revendication 13, caractérisé en ce que le dispositif d'entraînement (41) des cylindres de transport (39, 40) peut être accouplé à un dispositif (60) pour verrouiller la cassette à l'appareil à copier (50).

15. Dispositif selon la revendication 14, caractérisé en ce que le dispositif d'entraînement (41) des cylindres de transport est commandé par le moyen de verrouillage, de façon que, lors du verrouillage, une longueur de papier déterminée soit sortie de la cassette et que, lors du déverrouillage, la même longueur de papier soit rentrée dans la cassette.

16. Dispositif selon la revendication 11, caractérisé en ce qu'au niveau de la fente est prévu un bec de cassette (25, 26) qui, dans ses parties supérieure (26) et inférieure (25) formant le passage de papier, comporte des ouvertures coïncidentes (27, 28, 29, 30) pour contrôler la situation du papier.

17. Procédé pour commander le prélèvement du papier dans un dispositif conforme à la revendication 11, caractérisé en ce que le dispositif d'entraînement de bobine est commandé de façon à créer un mou d'une longueur prédéterminée dans la cassette et à effectuer, au moins après la liaison de la cassette avec l'appareil à copier, une opération de calibrage au cours de laquelle est déterminé l'angle de rotation de la bobine nécessaire pour créer le mou.

18. Procédé selon la revendication 17, caractérisé en ce qu'au cours de l'opération de calibrage, l'angle de rotation de la bobine (35) est mesuré pendant le transport d'une longueur de papier déterminée et sert à calculer, en fonction du diamètre de la bobine (35), l'angle de rotation selon lequel la bobine (35) doit être déplacée pour créer le mou nécessaire avant chaque étape de transport.

19. Procédé selon la revendication 18, caractérisé en ce que le mou est créé dans les spires extérieures de la bobine (35) après l'opération de calibrage et à nouveau avant la première étape de transport du papier (24) vers l'appareil à copier (50), et en ce que la bobine (35) est entraînée de façon que ce mou reste sensiblement conservé lors des étapes de transport ultérieures.

20. Procédé selon la revendication 19, caractérisé en ce que, lors du prélèvement du papier, des opérations de calibrage sont effectuées à intervalles réguliers, et l'épaisseur du papier et la longueur de papier encore en réserve sur la bobine sont calculées à l'aide de la diminution du diamètre de la bobine et de la longueur de papier prélevée.

21. Procédé selon la revendication 18, caractérisé en ce que, avant chaque opération de calibrage, le papier est tendu entre le dispositif d'entraînement de bobine et l'endroit où la longueur de papier prélevée est mesurée.

Fig.2      Fig.1

EP 0 528 236 B1

Fig.3

Fig.4a

Fig.4b

Fig.4c

13

Fig.5

Fig.6